# EUROPÄISCHE PATENTSCHRIFT

(11) **EP 1 854 526 B1**
(45) Veröffentlichungstag und Bekanntmachung des Hinweises auf die Patenterteilung: **01.09.2010**
(21) Anmeldenummer: 07450088.5
(22) Anmeldetag: 11.05.2007
(51) Int. Cl.: B01D 33/68

(54) **Vorrichtung zum Filteren von Flüssigkeiten**
Device for filtering liquids
Dispositif de filtration de liquides

(30) Priorität: 12.05.2006 AT 8232006
(43) Veröffentlichungstag der Anmeldung: 14.11.2007
(73) Patentinhaber: Pantreon GmbH, 4810 Gmunden (AT)
(72) Erfinder: Lüer, Andreas, 4810 gmunden (AT)
(74) Vertreter: Hübscher, Helmut

(56) Entgegenhaltungen:
- EP-B1- 0 577 854

## Beschreibung

Die Erfindung bezieht sich auf eine Vorrichtung zum Filtrieren von Flüssigkeiten mit einem Behälter, mit Einrichtungen zum Einleiten einer zu filtrierenden Flüssigkeit in den Behälter, mit wenigstens einem Behälterauslaß für unfiltriert aus dem Behälter abzuleitende Flüssigkeit und mit wenigstens einem um die Behälterachse rotierend antreibbaren Rotor mit einer in einer Stirnwand gelagerten Hohlwelle und mit einer daran befestigten Tragvorrichtung für mit radialem Abstand zur Behälterachse angeordnete Filterelemente, deren Inneres über die Tragvorrichtung mit der Hohlwelle als Ableitung für filtrierte Flüssigkeit in Strömungsverbindung steht.

Derartige bekannte Vorrichtungen (EP 577 854 B1) umfassen einen Rotor als Rührkörper, deren Rührelemente von den Filterelementen gebildet werden. Damit wird das Hauptproblem bei der Membranfiltration von Flüssigkeiten, nämlich die Bildung von Deckschichten auf der Membranoberfläche und die dadurch verursachte Verkleinerung und Verblockung der Membranporen, verhindert bzw. reduziert. Diese Deckschichten entstehen zumeist durch Agglomeration von an den Membranporen abgetrennten Feststoffteilchen und deren Aufkonzentration im Bereich der Membranoberfläche. Dieser Effekt läßt sich während eines kontinuierlichen Filtrationsprozesses mit derartigen Vorrichtungen dadurch vermeiden, daß durch die Rotation der Fi lterelemente im Behälter auf den Membranoberflächen turbulente Querströmungen und somit Scherkräfte erzeugt werden, die eine laufende mechanische Abreinigung der Filterelemente und eine laufende Durchwirbelung der zu filtrierenden Flüssigkeiten bewirken.

Diese Vorrichtungen sind gut dafür geeignet hohe Scherraten und Turbulenzen unter relativ geringem energetischen Aufwand zu erzielen. Das Kernstück ist ein abgeschlossener Filterbehälter, in dem ein oder mehrere rotierende Drehkränze von Motoren angetrieben werden. Die filtrierten Flüssigkeiten werden ausgehend von Rohrförmigen, Scheibenförmigen od. dgl. Filterelementen im Rotor gesammelt und über Rotorspeichen, Rotornabe und die Hohlwelle aus dem Innenraum des Behälters abgeführt. Die Filtermodule sind auf dem Rotor montiert und gegen im Behälter vorherrschende hohe Drücke abgedichtet.

Die Flüssigkeit im Behälter konzentriert sich im Betrieb stetig auf, da das Filtrat/Permeat kontinuierlich durch die Filterelemente abfließt und dem Druckabfall entsprechend neue Flüssigkeit zugeführt wird. Im Betrieb kann diese Art der Aufkonzentrierung so lange fortgesetzt werden, bis die Viskosität der Lösung durch Anstieg des Feststoffgehaltes einen Maximalwert erreicht hat, bis zu dem die Durchflussmenge noch wirtschaftlich ist. Das Suspensionskonzentrat wird dann über den Behälterauslaß entleert oder während des Betriebes kontinuierlich abgelassen. Diese Vorgehensweise hat allerdings den Nachteil, daß wenn ein besonders hohes aufkonzentrieren der Flüssigkeit erforderlich ist diese Vorrichtungen nur unwirtschaftlich betrieben werden können und dabei kein kontinuierlicher Betrieb der Vorrichtung möglich ist, da auf Grund der Turbulenten Verhältnisse im Behälter im kontinuierlicher Betrieb keine wünschenswert hohe Aufkonzentration möglich ist.

Der Erfindung liegt die Aufgabe zugrunde eine Vorrichtung der Eingangs geschilderten Art zu schaffen, welche die vorgenannten Nachteile vermeidet und mit einfachen Mitteln ein höheres aufkonzentrieren der Flüssigkeit und ein vorteilhaftes Ableiten der höher aufkonzentrierten Flüssigkeit aus dem Behälter gestattet.

Die Erfindung löst diese Aufgabe dadurch, daß sich die Innenwandung des Behälterumfangsmantels unter Ausbildung einer Leiteinrichtung für die Flüssigkeit entlang der Behälterachse gegen den Behälterauslaß hin erweitert.

Beobachtungen im Betrieb derartiger Vorrichtungen haben gezeigt, dass sich schwerere Moleküle (schwere Phasen) durch die Rotation und Zentrifugalwirkung trotz der im Betrieb im Behälter vorherrschenden hochturbulenten Strömungen in den äußeren Bereichen, also im Bereich des Mantelumfanges, des Behälters anreichern. Leichtere Moleküle konzentriert sich im Behälterzentrum und es kommt trotz der intensiven Durchmischung in Folge der Rührwirkung zu einer gewissen Separation der Teilchen im Behälter. Damit ist bei mit möglichst großem Abstand zur Behälterachse am Behälterumfangsmantel angeordneten Auslaßöffnungen, insbesondere im kontinuierlichen Betrieb der Vorrichtung, eine wesentlich verbesserte Aufkonzentrationsrate durch Nutzung der Dichtedifferenzen in der zu filtrierenden Flüssigkeit, in Folge der aus der Rotation der Filterelemente im Behälter resultierenden Zentrifugalwirkung und somit Separationswirkung, möglich. Ist eine gewünschte Aufkonzentrationsrate in den Bereichen der Auslaßöffnungen erreicht, so kann die hoch aufkonzentrierte Flüssigkeit kontinuierlich aus dem Behälter abgeführt werden. Gleichermaßen besteht die Möglichkeit dem Behälter zu filtrierende Flüssigkeit zuzuleiten.

Gehören dem Behälterumfangsmantel zu der wenigstens einen Auslaßöffnung hin weisende Leiteeinrichtungen für die Flüssigkeit zu, die insbesondere an den Innenwänden des Behälterumfangsmantels angeordnet sind, besteht die Möglichkeit die Flüssigkeit noch weiter aufzukonzentrieren und besonders vorteilhaft aus dem Behälter abzuleiten. Die Leiteeinrichtungen sind derart gestaltet, daß die schwereren Phasen bei einer Rotordrehung gezielt zu den Auslaßöffnungen im Behälter geleitet werden.

Umfaßt der Behälterauslaß mehrere ringartig um den Behältermantel angeordnete Auslaßöffnungen, die gegebenenfalls an eine den Behälter umfassende Ringleitung angeschlossen sind, besteht die Möglichkeit aufkonzentrierte Flüssigkeit über den Umfang gleichmäßig langsam abzuführen, um so die ungewollte Abfuhr niederkonzentrierterer Phasen durch erneute Verdünnung des Konzentrates in den Nahbereichen Behälterumfangsmantels in Folge etwaiger Querströmungen zu vermeiden.

Bisher wurden Behälter mit zylindrischem Behälterumfangsmantel verwendet, die stirnseitig durch flache Böden oder gewölbte Böden abgeschlossen sind. Um derartige Behälter gemäß der Erfindung ausgestalten zu können, besteht die Möglichkeit den Behälter im Nahbereich einer bzw. beider Behälterstirnwände mit Auslaßöffnungen auszustatten oder nachzurüsten. Bei Vorrichtungen mit zylindrischem Behälterumfangsmantel findet die Ansammlung von Konzentrat in den vom Rotorzentrum am weitest entfernten Bereichen des Behälters, also im Bereich des oberen und des unteren Endes der zylindrischen Form, im Übergangsbereich zu den Behälterstirnwänden hin, statt. Zur Unterstützung der Separationswirkung kann der zylindrische Behälterumfangsmantel innenseitig zwischen den den einzelnen Behälterstirnwänden zugeordneten Auslaßöffnungen mit einer entsprechenden Leiteinrichtungen ausgestattet werden.

Besonders einfache Konstruktionsverhältnisse ergeben sich, wenn der Behältermantel selbst teil der Leiteinrichtung ist oder diese bildet und dazu wahlweise kegelstumpfförmig oder mit sich zwischen den Behälterstirnseiten zum Behälterzentrum hin sich vergrößerndem oder verkleinerndem Mantelradius, wie keil-, doppelkeil-, tonnen-, diaboloförmig u. dgl., ausgebildet ist.

Zwecks Verbesserung der Separationswirkung der einzelnen Phasen bzw. zur Erhöhung der Filterreinigungswirkung können wenigstens zwei um die Behälterachse gegensinnig oder mit verschiedenen Drehzahlen antreibbare Rotoren vorgesehen sein. Die Ansteuerung erfolgt dann in üblicher Weise in Abhängigkeit der jeweiligen Betriebsparameter. Zusätzlich können auf einem Stator im Behälter montierte Filterelemente vorgesehen sein, die von der vom Rotor generierten turbulenten Strömung umströmt werden.

Zum noch weiteren aufkonzentrieren der Flüssigkeit kann der Behälterauslaß in einen Sedimentierbehälter ausmünden, dessen Auslaß für abgeschiedene Flüssigkeit an eine wiederum ins Behälterinnere führende Leitung angeschlossen ist. Die aus dem hochturbulenten Milieu des Behälters mit rotierendem Filterelementen abgeleitete schwere Phase kann in dem Sedimentierbehälter noch weiter aufkonzentriert und die leichtere Phase daraus wieder über die Leitung in den Behälter zurückgeführt werden.

In der Zeichnung ist die Erfindung anhand eines Ausführungsbeispieles schematisch dargestellt. Es zeigen:
Fig. 1 Eine Erfindungsgemäße Vorrichtung im teilgeschnittenen Querschnitt,
Fig. 2 und 3 Konstruktionsvarianten der Vorrichtung aus Fig. 1 im Querschnitt und

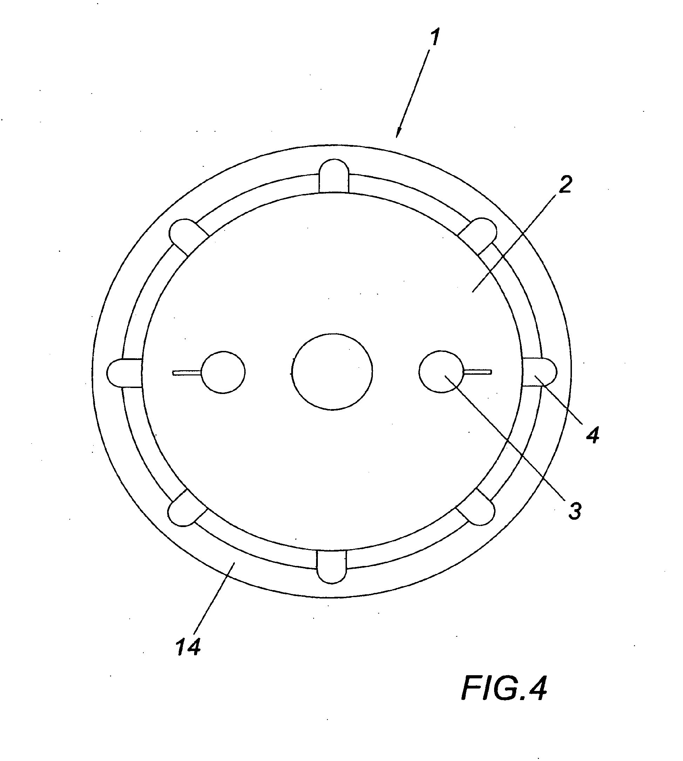

Fig. 4 die Vorrichtung aus Fig. 1 in Draufsicht.

Eine Vorrichtung 1 zum Filtrieren von Flüssigkeiten umfaßt einen Behälter 2, nicht näher dargestellte Einrichtungen zum Einleiten einer zu filtrierenden Flüssigkeit in den Behälter 2, die üblicherweise im Bereich des Behälterbodens in den Behälter 2 eingeleitet wird, einen Behälterauslaß 4 für unfiltriert aus dem Behälter 2 abzuleitende Flüssigkeit und einen um die Behälterachse 5 rotierend antreibbaren Rotor 6 mit einer in der unteren Stirnwand 7 gelagerten Hohlwelle 8 und einer daran befestigten Tragvorrichtung 9 für mit radialem Abstand zur Behälterachse 5 angeordnete Filterelemente 10. Das innere der Filterelemente 10 mündet über die Tragvorrichtung 9 und die Hohlwelle 8 aus dem Behälter 2 als Ableitung für filtrierte Flüssigkeit.

Gemäß der Erfindung umfaßt der Behälterauslaß 4 mehrere im Behälterumfangsmantel 11 mit möglichst großem Abstand zur Behälterachse 5 angeordnete Ausla-ßöffnungen 12. Dem Behälterumfangsmantel 11 gehört behälterinnenseitig wenigstens eine zu den Auslaßöffnungen 12 hin weisende Leiteeinrichtung zu.

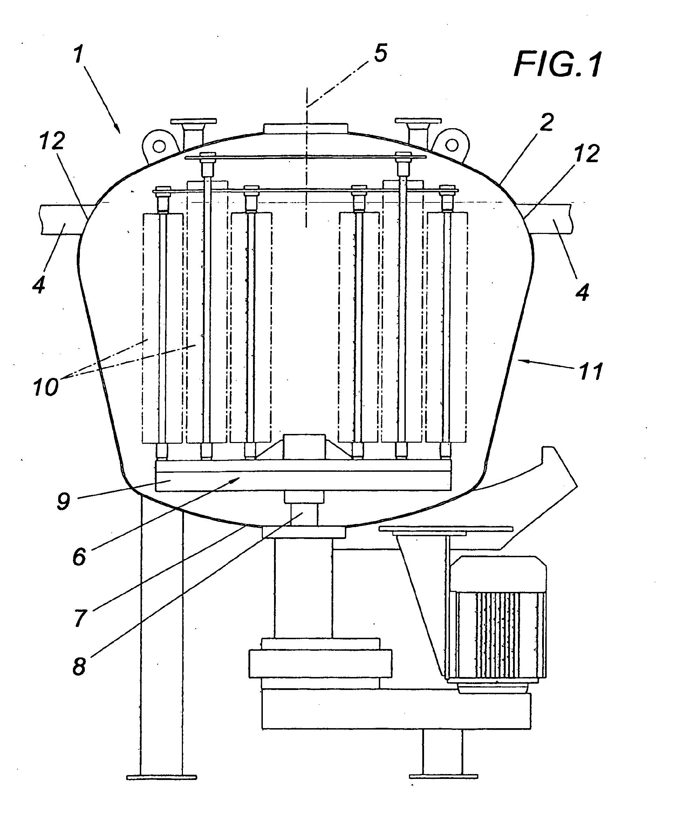

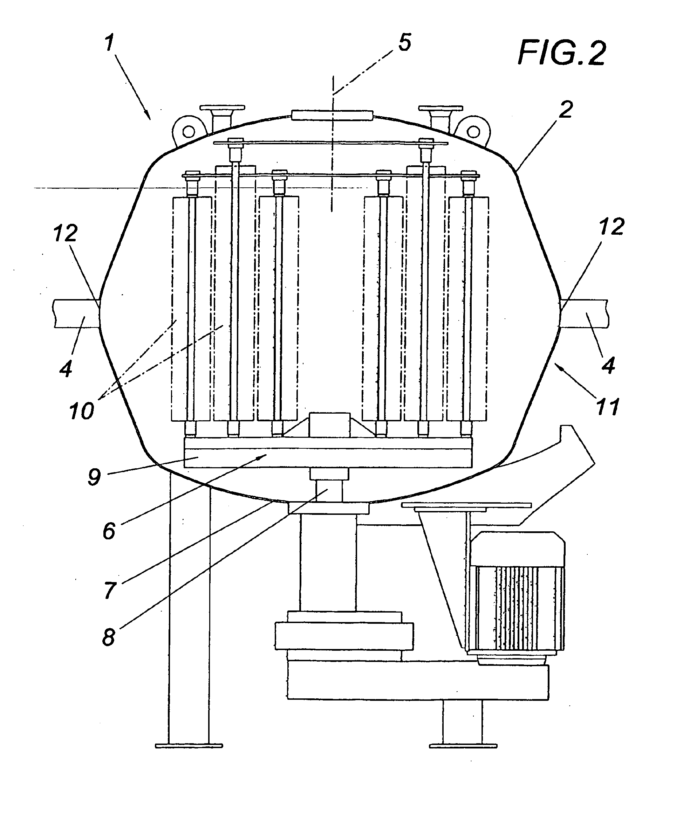

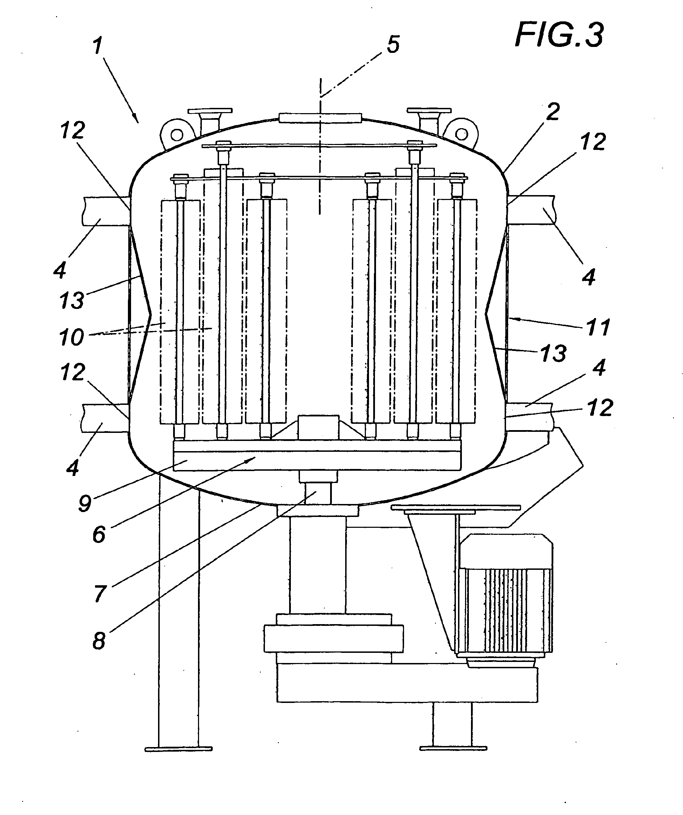

Der Behälterumfangsmantel ist entweder selbst Teil der Leiteinrichtung (Fig. 1 u. 2) und dazu kegelstumpfförmig (Fig. 1) oder mit sich zwischen den Behälterstirnseiten zum Behälterzentrum hin sich vergrößerndem Mantelradius (Fig. 2, tonnenförmig) ausgebildet, oder nimmt innenseitig eine Leiteinrichtung 13 (Fig. 3, diaboloförmig) auf.

Der Behälterauslaß 4 umfaßt mehrere ringartig um den Behältermantel angeordnete Auslaßöffnungen 12, die an eine den Behälter 2 umfassende Ringleitung 14 angeschlossen sind. Im Ausführungsbeispiel nach Fig. 3 weist der Behälter 2 einen zylinderförmigen Behälterumfangsmantel 11 auf, dem mehrere Auslaßöffnungen 12 im Nachbereich beider Behälterstirnwände zugeordnet sind.

Im Filtrationsbetrieb wird zunächst der Behälter 1 mit der zu filtrierenden Flüssigkeit über eine nicht dargestellte Zuführpumpe, die einen druckabhängigen Leistungsverlauf aufweist, befüllt. Danach wird der Rotor 6 zugeschaltet. Die Drehzahl des Rotors 6 wird nach je Bedarf gesteuert, um die Rotorgeschwindigkeit an die Eigenschaften der Filterelemente 10 (Membranen) und der Flüssigkeit anpassen zu können. Im Zusammenspiel von rotierenden Filterelementen 10, Leiteinrichtungen, gegebenenfalls Strömungsbrechem an der Behälterinnenwand, Pulsationsfrequenzen im Rotorantrieb u. dgl. entstehen im Innenraum des Behälters 2 die gewünschten turbulenten Verhältnisse. Damit wird selbst bei höherviskosen Flüssigkeiten ein Konzentrationsaustausch in der Flüssigkeit und werden die für die Selbstreinigung der Filterelemente notwendigen Scherkräfte auf den Filteroberflächen erreicht.

Die Flüssigkeit im Behälter 2 konzentriert sich im Betrieb stetig auf, da das Filtrat/Permeat kontinuierlich durch die Filterelemente 10 abfließt und dem Druckabfall entsprechend neue Flüssigkeit zugeführt wird. Im Betrieb wird diese Aufkonzentrierung so lange fortgesetzt, bis die Viskosität der Lösung durch Anstieg des Feststoffgehaltes insbesondere im Bereich der Auslaßöffnungen einen gewünschten Wert erreicht hat. Anschließend wird auf kontinuierlichen Betrieb umgestellt, in dem ein Behälterauslaßventil zur kontrollierten kontinuierlichen Ableitung geöffnet wird. Gleichermaßen wird dem Behälter 2 zu filtrierende Flüssigkeit zugeleitet. Ein Ablassen des Behälters erfolgt in üblicher Weise über eine nicht dargestellte Ablaßöffnung.

## Patentansprüche

1. Vorrichtung (1) zum Filtrieren von Flüssigkeiten mit einem Behälter (2), mit Einrichtungen (3) zum Einleiten einer zu filtrierenden Flüssigkeit in-den Behälter (2), mit wenigstens einem Behälterauslaß (4) für unfiltriert aus dem Behälter (2) abzuleitende Flüssigkeit und mit wenigstens einem um die Behälterachse (5) rotierend antreibbaren Rotor (6) mit einer in einer Stirnwand (7) gelagerten Hohlwelle (8) und mit einer daran befestigten Tragvorrichtung (9) für mit radialem Abstand zur Behälterachse (5) angeordnete Filterelemente (10), deren Inneres über die Tragvorrichtung (9) mit der Hohlwelle (8) als Ableitung für filtrierte Flüssigkeit in Strömungsverbindung steht, **dadurch gekennzeichnet, daß** sich die Innenwandung des Behälterumfangsmantels (11) unter Ausbildung einer Leiteinrichtung für die Flüssigkeit entlang der Behälterachse (5) gegen den Behälterauslaß (4) hin erweitert.

2. Vorrichtung nach Anspruch 1, **dadurch gekennzeichnet, daß** der Behälterauslaß (4) mehrere ringartig um den Behälterumfangsmantel (11) angeordnete Auslassöffnungen (12) umfasst, die gegebenenfalls an eine den Behälter (2) umfassende Ringleitung (14) angeschlossen sind.

3. Vorrichtung nach Anspruch 1 oder 2, **dadurch gekennzeichnet, daß** der Behälter (2) einen zylinderförmigen Behälterumfangsmantel (11) aufweist, dem an der Innenwand zu der wenigstens einen Auslassöffnung hin weisende Leiteinrichtungen zugehören, wobei die wenigstens eine Auslaßöffnung (12) im Nahbereich einer Behälterstimwand (7) angeordnet ist, vorzugsweise aber mehrere Auslaßöffnungen (12) im Nahbereich beider Behälterstirnwände angeordnet sind.

4. Vorrichtung nach Anspruch 1 oder 2, **dadurch gekennzeichnet, daß** der Behälterumfangsmantel (11) unter Ausbildung einer Leiteeinrichtung kegelstumpfförmig ausgebildet ist

5. Vorrichtung nach Anspruch 1 oder 2, **dadurch gekennzeichnet, daß** der Behälterumfangsmantel (11) unter Ausbildung einer Leiteeinrichtung mit sich zwischen den Behälterstirnseiten zum Behälterzentrum hin sich vergrößerndem oder verkleinemdem Mantelradius ausgebildet ist.

6. Vorrichtung nach einem der Ansprüche 1 bis 4, **dadurch gekennzeichnet, daß** wenigstens zwei um die Behälterachse (5) gegensinnig bzw. mit verschiedenen Drehzahlen antreibbare Rotoren (6) vorgesehen sind.

7. Vorrichtung nach einem der Ansprüche 1 bis 5, **dadurch gekennzeichnet, daß** der Behälterauslaß (4) in einen Sedimentierbehälber ausmündet, dessen Auslaß für abgeschiedene Flüssigkeit an eine wiederum ins Behälterinnere führende Leitung angeschlossen ist.

## Claims

1. Apparatus (1) for filtering liquids having a container (2), having devices (3) for introducing a liquid to be filtered into the container (2), having at least one container outlet (4) for liquid which is to be discharged from the container (2) unfiltered, and having at least one rotor (6) which can be driven in a rotating manner about the container axis (5) and has a hollow shaft (8) mounted in an end wall (7) and a support apparatus (9) which is attached thereto for filter elements (10) disposed at a radial spaced interval with respect to the container axis (5) and whose interior is in flow connection via the support apparatus (9) with the hollow shaft (8) as a discharge line for filtered liquid, **characterised in that** the inner wall of the container circumferential casing (11) widens along the container axis (5) towards the container outlet (4) with the formation of a guiding device for the liquid.

2. Apparatus as claimed in claim 1, **characterised in that** the container outlet (4) comprises several outlet openings (12) which are disposed in a ring-like manner around the container circumferential casing (11) and which are optionally connected to an annular line (14) encompassing the container (2).

3. Apparatus as claimed in claim 1 or 2, **characterised in that** the container (2) comprises a cylindrical container circumferential casing (11) which is associated with guiding devices which point on the inner wall towards the at least one outlet opening, wherein the at least one outlet opening (12) is disposed in close proximity to a container end wall (7), but preferably several outlet openings (12) are disposed in close proximity to both container end walls.

4. Apparatus as claimed in claim 1 or 2, **characterised in that** the container circumferential casing (11) is formed in the shape of a truncated cone with the formation of a a guiding device.

5. Apparatus as claimed in claim 1 or 2, **characterised in that** the container circumferential casing (11) with the formation of a guiding device is formed having a casing radius which increases or decreases in size towards the container centre between the container end sides.

6. Apparatus as claimed in any one of claims 1 to 4, **characterised in that** at least two rotors (6) are provided which can be driven about the container axis (5) in opposite directions or at different rotational speed.

7. Apparatus as claimed in any one of claims 1 to 5. **characterised in that** the container outlet (4) issues into a sedimentation container, whose outlet for separated liquid is connected to a line leading in turn into the interior of the container.

## Revendications

1. Dispositif (1) pour filtrer des liquides, avec un récipient (2), avec des équipements (3) pour introduire un liquide à filtrer dans le récipient (2), avec au moins une évacuation de récipient (4), pour du liquide à évacuer non filtré, hors du récipient (2), et avec au moins un rotor (6) susceptible d'être entraîné en rotation autour de l'axe de récipient (5), avec un arbre creux (8) monté en palier dans une paroi frontale (7) et avec un dispositif support (9) y étant fixé, pour des éléments filtrants (10) disposés à distance radiale de l'axe de récipient (5), dont le volume intérieur est placé en liaison d'écoulement, par l'intermédiaire du dispositif support (9), avec l'arbre creux (8) faisant office de conduite d'évacuation pour du liquide filtré, **caractérisé en ce que** la paroi intérieure de l'enveloppe périphérique de récipient (11) va en s'élargissant en évoluant vers l'évacuation de récipient (4), en constituant un dispositif de guidage pour le liquide, le long de l'axe de récipient (5).

2. Dispositif selon la revendication 1, **caractérisé en ce que** l'évacuation de récipient (4) comprend une pluralité d'ouvertures d'évacuation (12), disposées en anneau autour de l'enveloppe périphérique de récipient (11), le cas échéant raccordées à une conduite annulaire (14) entourant le récipient (2).

3. Dispositif selon la revendication 1 ou 2, **caractérisé en ce que** le récipient (2) présente une enveloppe périphérique de récipient (11) en forme de cylindre, à laquelle, sur la paroi intérieure, appartiennent des dispositifs de guidage tournés vers la au moins une ouverture d'évacuation, la au moins une ouverture d'évacuation (12) étant disposée dans la zone de proximité d'une paroi frontale de récipient (7), de préférence cependant plusieurs ouvertures d'évacuation (12) étant disposées dans la zone de proximité des deux parois frontales de récipient.

4. Dispositif selon la revendication 1 ou 2, **caractérisé en ce que** l'enveloppe périphérique de récipient (11) est réalisée en forme de tronc de cône en constituant un dispositif de guidage.

5. Dispositif selon la revendication 1 ou 2, **caractérisé en ce que** l'enveloppe périphérique de récipient (11) est réalisée en constituant un dispositif de guidage avec un rayon d'enveloppe allant en grossissant ou en diminuant par rapport au centre de récipient, en évoluant entre les faces frontales de récipient.

6. Dispositif selon l'une des revendications 1 à 4, **caractérisé en ce qu'**au moins deux rotors (6), susceptibles d'être entraînés à des vitesses de rotation différentes et en sens inverse autour de l'axe de récipient (5) sont prévus.

7. Dispositif selon l'une des revendications 1 à 5, **caractérisé en ce que** l'évacuation de récipient (4) débouche dans un récipient de sédimentation, dont l'évacuation pour liquide décanté est raccordée à une conduite menant de nouveau à l'intérieur du récipient.
